# DEMANDE DE BREVET EUROPEEN

(11) **EP 1 315 320 A2**
(43) Date de publication de la demande: **28.05.2003**
(21) Numéro de dépôt: 02292737.0
(22) Date de dépôt: 04.11.2002
(51) Int. Cl.: H04B 10/152

(54) **Système de transmission par fibres optiques à horloge commune**

(30) Priorité: 22.11.2001 FR 0115108
(71) Demandeur: ALCATEL, 75008 Paris (FR)
(72) Inventeur: Zami, Thierry, 91300 Massy (FR); Dupas, Arnaud, 91240 St-Michel-sur-Orge (FR); Rofidal, Olivia, Les Jardins de Bures Bât B- Esc F, 91440 Bure-sur-Yvette (FR)
(74) Mandataire: Sciaux, Edmond

(57) **Abrégé**

Système optique composé d'un premier dispositif pour régénérer une pluralité de signaux électriques ou optiques (211, 213, 215, 217) en un signal optique composite (235) incluant une pluralité de longueurs d'ondes et comprenant une pluralité de modulateurs optiques (210, 212, 214 et 216) et un multiplexeur (230) des signaux fournis par les modulateurs, chacun des modulateurs comprenant une entrée (219) pour les signaux et une entrée d'horloge (221); et un second dispositif pour régénérer le signal optique composite en une pluralité de signaux électriques ou optiques, et comprenant un moyen pour dé-multiplexer la pluralité de longueurs d'ondes et une pluralité de régénérateurs comprenant chacun une entrée d'horloge et une sortie de données pour restituer un signal électrique. Un premier circuit d'horloge (220) est commun à toutes les entrées d'horloge du premier dispositif ainsi qu'un second circuit commun d'horloge est commun à toutes les entrées d'horloge du second dispositif.

## Description

La présente invention concerne la technologie des transmissions par fibres optiques en général, et décrit plus particulièrement un système de transmission optique à horloge commune permettant de réduire le coût de réalisation des convertisseurs optiques dans un mode de transmission où de nombreuses longueurs d'ondes, organisées en bandes de longueurs d'ondes, sont transportées ensembles dans un réseau de fibres optiques.

Depuis des années, les opérateurs de réseaux investissent dans le transport de l'information (voix et données) sous forme optique en raison des avantages inhérents au mode de transmission sur fibre. En particulier les réseaux fédérateurs ('Backbone') ont vu leur capacité de transport augmentée dans des proportions considérables grâce à l'adoption d'une technique connue sous l'acronyme de DWDM pour 'Dense Wavelength Division Multiplexing'. Cette technique permet en effet de transmettre des longueurs d'ondes différentes dans une même fibre et donc de multiplier le nombre de canaux de transmission, complètement indépendants, sur une même fibre physique. Des dizaines, voire des centaines de longueurs d'ondes, peuvent ainsi être combinées et transportées dans un même milieu de propagation.

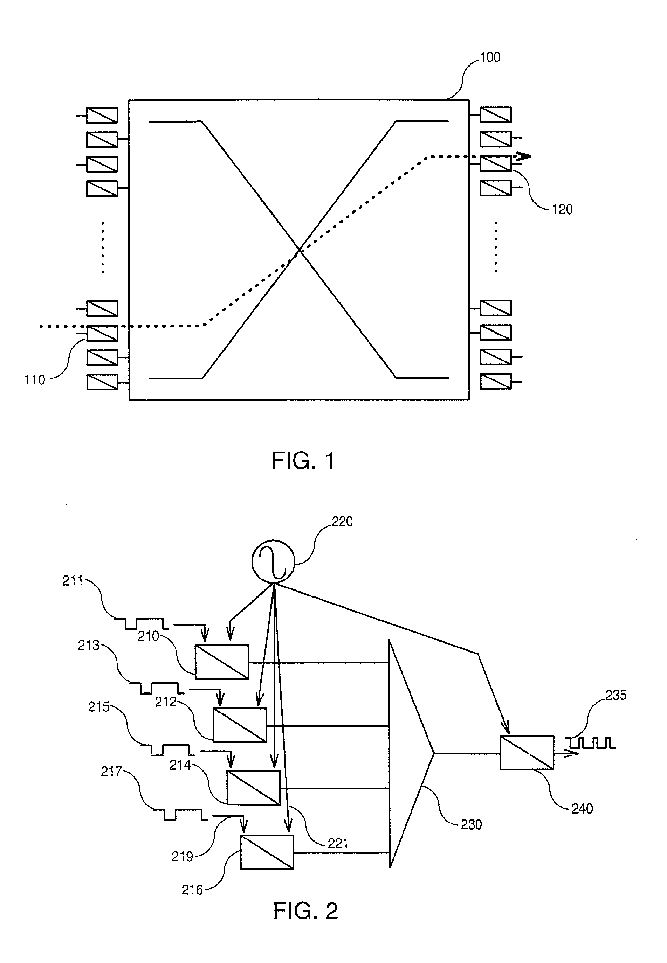

Une fonction essentielle dans ces réseaux est alors de pouvoir diriger et orienter les flots d'information transportés, sous forme d'une modulation des diverses longueurs d'ondes, vers leur destination finale. Ceci est notamment réalisé par l'intermédiaire de commutateurs optiques dont un schéma fonctionnel (100) est illustré sur la **figure 1.** Ces dispositifs sont d'une façon générale à même de diriger n'importe lequel des flots reçus sur une des interfaces d'entrée, par exemple (110), vers n'importe laquelle des interfaces de sortie, par exemple (120). Chacune de ces interfaces d'entrée ou de sortie nécessite d'être synchronisée par un dispositif fournissant un signal d'horloge. Toutefois la réalisation pratique de ces dispositifs est onéreuse. En particulier parce que ces interfaces doivent combiner les nouvelles technologies optiques à celles, toujours nécessaires, de l'électronique traditionnelle.

Une autre fonction essentielle est la transmission sur de longues distances. Le document **US 4.267.590** décrit un système de transmission qui comporte
- Une pluralité de dispositifs d'émission pour recevoir une pluralité de signaux électriques de données, et moduler respectivement une pluralité de signaux optiques ayant des longueurs d'onde différentes, puis les multiplexer spectralement en un signal optique composite.
- Une fibre optique de transmission.
- Un dispositif pour démultiplexer ledit signal optique composite en une pluralité de signaux optiques.
- Une pluralité de dispositifs de réception connectés respectivement à chacune des sorties du dispositif pour dé-multiplexer.

Les dispositifs d'émission est synchronisés respectivement par une pluralité de signaux d'horloge déphasés, fournis par une horloge commune relie à une cascade des dispositifs de déphasage. Chacun des dispositifs de réception reçoit un seul des signaux optiques résultants du démultiplexage, il et est synchronisé individuellement par un dispositif de synchronisation comprenant un circuit d'acquisition de signal, d'horloge recevant ce signal optique.

Le but de l'invention est de fournir un système de transmission par fibres optiques utilisant une horloge commune aussi bien dans la partie émission que dans la partie réception, permettant ainsi de réduire le coût de réalisation du système.

L'objet de l'invention est donc un système de transmission par fibres optiques, notamment un commutateur optique, comprenant :
un premier dispositif pour régénérer une pluralité de signaux électriques ou optiques en un signal optique composite incluant une pluralité de longueurs d'ondes,
un premier circuit d'horloge fournissant un signal d'horloge commun pour régénérer ces signaux électriques ou optiques ;
un second dispositif pour régénérer ledit signal optique composite en une pluralité de signaux électriques ou optiques, ledit second dispositif comprenant un moyen pour dé-multiplexer ladite pluralité de longueurs d'ondes, et une pluralité de régénérateurs connectés respectivement à chacune des sorties dudit moyen pour dé-multiplexer, chacun des régénérateurs comprenant une entrée d'horloge et une sortie de données pour restituer un signal régénéré ;
**caractérisé** en ce que ledit second dispositif pour régénérer comprend un second circuit d'horloge commun pour fournir un signal d'horloge à chacun desdits régénérateurs ; et un moyen d'acquisition de signal d'horloge, commun à tous les régénérateurs du second dispositif pour régénérer, ce moyen d'acquisition étant connecté à l'une des sorties dudit moyen pour dé-multiplexer et à une entrée dudit second circuit d'horloge commun.

Les buts, objets, ainsi que les caractéristiques et avantages de l'invention ressortiront mieux de la description détaillée d'un mode préféré de réalisation de cette dernière. illustré par les dessins d'accompagnement dans lesquels :
La FIGURE 1 illustre un schéma fonctionnel d'un commutateur optique où l'invention trouve le mieux son application.
La FIGURE 2 représente la partie émission d'un système de transmission optique selon l'invention.
La FIGURE 3 représente la partie réception d'un système de transmission optique selon l'invention
Les FIGURES 4A, 4B et 4C représentent des systèmes permettant d'introduire une dé-corrélation entre les séquences de bits transmises sur des canaux adjacents.
La FIGURE 5 est un diagramme représentant le décalage temporel entre les signaux sur des canaux adjacents.

L'invention tire avantage de ce que les signaux optiques servant à transporter l'information sont en fait organisés en bandes regroupant plusieurs longueurs d'ondes ou canaux individuels de transmission. Une telle organisation permet d'obtenir un coût raisonnable avec un grande capacité de commutation d'information conforme à la demande toujours croissante en bande passante des réseaux de télécommunication.

Ainsi la **figure 2** prend comme exemple le cas d'une bande regroupant quatre longueurs d'ondes qui sont combinées pour être transportées, comme un tout, vers le point d'utilisation parcourant ainsi un chemin identique et traversant les mêmes équipements notamment un ou plusieurs commutateurs optiques du type illustré dans la figure 1. Ce mode de transmission est désigné sous l'acronyme de WBDM pour 'Wavelength Banding Division Multiplexing'. Ainsi, dans ce mode de transmission, les quatre modulateurs optiques (210, 212, 214 et 216) nécessaires pour moduler les quatre longueurs d'ondes de la bande à transmettre à partir de quatre signaux électriques correspondants (211, 213, 215 et 217) utilisent une même source d'horloge (220) de telle façon qu'ils soient parfaitement synchronisés à l'émission. Quoique l'invention fasse état ici d'une modulation à partir de signaux électriques, il doit être compris que ces signaux pourraient être aussi bien des signaux optiques.

Chaque modulateur comprenant donc, dans cet exemple particulier servant à illustrer l'invention, une entrée pour le signal électrique de modulation (219) et une entrée d'horloge (221). On notera ici que la modulation sera de préférence de type NRZ (Non Return to Zero), la plus simple à mettre en oeuvre à partir de signaux électriques binaires. Une fois modulées, les quatre longueurs d'ondes sont multiplexées optiquement (230) dans un dispositif standard approprié (par exemple un coupleur optique). L'horloge commune (220) peut également être mise à profit pour ajouter une modulation RZ commune (240) ce qui facilitera la détection du signal à l'autre bout de la transmission mais n'est cependant en rien indispensable pour une bonne mise en oeuvre de l'invention.

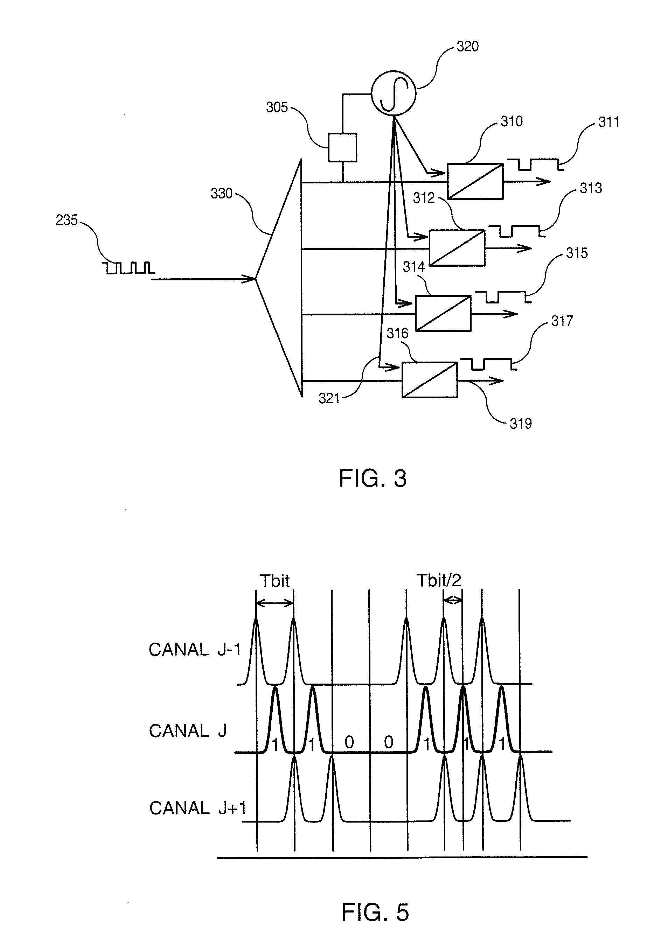

Puis, comme indiqué sur la **figure 3**, à la réception du signal transmis (235), les canaux individuels formant la bande de longueurs d'ondes sont démultiplexés (330) dans un dispositif optique standard (330) tel qu'un séparateur de longueurs d'ondes. L'un des canaux est alors sélectionné, celui du haut par exemple et le signal est reçu par un moyen d'acquisition (305) à partir duquel l'horloge utilisée lors de la transmission est extraite et peut donc être utilisée, moyennant un décalage temporel adéquat, pour les quatre canaux de la bande de longueurs d'ondes de cet exemple particulier de mise en oeuvre de l'invention. Les signaux, qui ont modulé les signaux optiques, peuvent alors être restitués (311, 313, 315 et 317) en sortie des quatre régénérateurs (310, 312, 314 et 316), et en utilisant, comme à l'émission, une seule source d'horloge (320), chaque convertisseur optique-électrique comprenant notamment une sortie (319) et une entrée d'horloge (321).

Ainsi l'invention permet de partager une seule horloge à l'émission comme à la réception contribuant à diminuer le coût de réalisation de la fonction.

On notera toutefois que la réalisation de l'invention suppose implicitement que la dispersion chromatique des signaux optiques transmis à travers les différents dispositifs nécessaires à l'acheminement des signaux vers leur destination finale est faible afin que l'horloge commune puisse effectivement, sans erreur, échantillonner les signaux optiques reçus. Cela passe notamment par l'utilisation de commutateurs, du type de la figure 1, incluant une compensation chromatique qui est une technique connue de l'homme de l'art.

Par ailleurs les spécialistes en transmission optique savent bien que le transport d'information par modulation de longueurs d'ondes proches, comme dans le cas du WBDM, peut induire des phénomènes parasites indésirables. Il se produit alors une inter-modulation parasite croisée entre canaux. Ces phénomènes qui apparaissent notamment dans le type de commutateurs optiques de la figure 1 et en particulier avec l'utilisation nécessaire d'amplificateurs optiques ou SOA (Semiconductor Optical Amplifier) sont connus des spécialistes sous le nom de XGM pour 'Cross-Gain Modulation' et aussi sous le nom FWM pour 'Four Wave Mixing'. Ces phénomènes parasites sont d'autant plus accentués que les données véhiculées sur des canaux adjacents sont identiques. Si, en général, les données à transporter sur des canaux adjacents sont différentes, il n'est pas rare cependant que des périodes de plus ou moins longue durée, puissent exister où les données transportées sont de fait identiques. En particulier, les entêtes de messages ont souvent des parties communes qui se répètent régulièrement et qui peuvent être en phase entre deux canaux adjacents.

Par ailleurs l'utilisation effective des canaux de transmissions n'atteint que très exceptionnellement leur pleine capacité. Une pratique courante consiste alors à envoyer, au lieu de paquets de données réelles, des pseudo paquets vides de données, qui maintiennent la synchronisation entre les équipements de communication. Les paquets vides, toujours d'un même format, que le récepteur sait reconnaître comme tels, sont simplement ignorés à la réception au delà de leur utilisation qui est donc de maintenir la synchronisation d'un lien. Ainsi, une partie significative des informations transmises par des canaux adjacents peut être identique, d'autant plus que les canaux de transmission sont sous-utilisés et donc comportent beaucoup de paquets vides.

Dans ce cas, les phénomènes parasites d'inter-modulation mentionnés ci-dessus peuvent atteindre un niveau incompatible avec une bonne mise en oeuvre de l'invention en raison d'un taux d'erreur, BER ou 'Bit Error Rate', trop important sur les liens. L'invention, comme décrit dans les figures 2 et 3, suppose en effet que les signaux transportés sont parfaitement synchronisés pour permettre l'utilisation d'une horloge commune, ce qui ne peut qu'exacerber l'apparition des phénomènes indésirables décrits. Ainsi, pour pouvoir tirer pleinement avantage de l'invention il y a donc lieu d'introduire une dé-corrélation entre les séquences de bits transmises entre canaux adjacents.

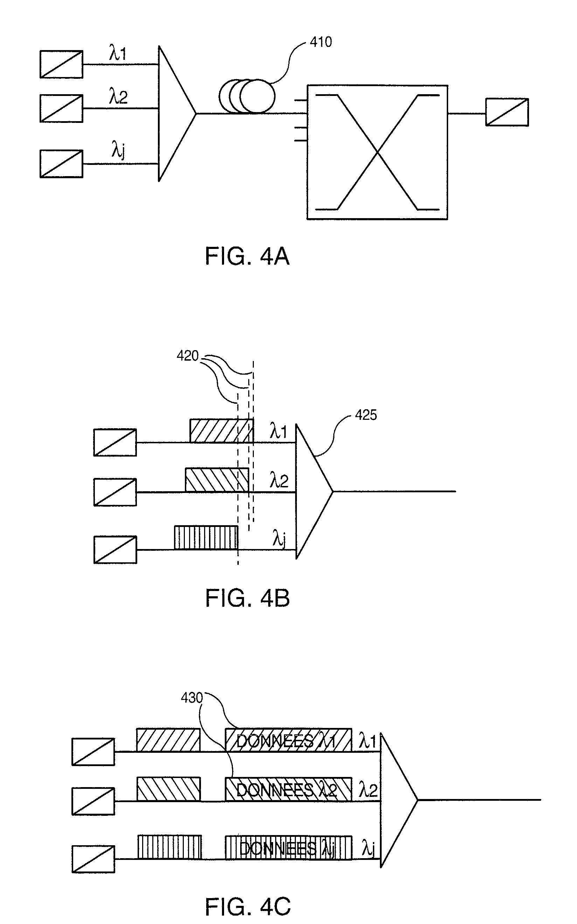

Les **figures 4A, 4B et 4C** illustrent la mise en oeuvre de trois méthodes pour obtenir l'effet désiré. La **figure 4A** montre que la dé-corrélation est obtenue au niveau optique en introduisant une fibre optique (410) d'une longueur suffisante (plusieurs kilomètres) qui par l'effet de la dispersion chromatique va créer un décalage temporel entre canaux adjacents.

Le dispositif de la **figure 4B** permet d'obtenir le même effet par l'introduction de délais, entre canaux adjacents, au niveau électrique (420) avant mélange des longueurs d'ondes constituant la bande de longueurs d'ondes (425). Le décalage temporel D entre 2 canaux adjacents j et j-1 est un nombre réel αᵢ du temps bit Tbit défini comme suit : Dᵢ-Dᵢ₋₁ = αᵢ Tbit.

Dans le cas d'un schéma de modulation RZ, on peut tirer avantage du retour à zéro de la puissance entre 2 symboles. Quand le reste de la division du décalage temporel entre canaux adjacents par le temps bit est égal à la moitié d'un temps bit (αᵢ=0.5), un canal j atteint son maximum de puissance pendant que les canaux adjacents j+1 et j-1 sont à leur puissance minimale (voir **Figure 5**). Du fait de la diversité des composantes de FWM dans un contexte WDM, la plage efficace du décalage temporel entre canaux est élargie suivant la formule suivante : αᵢ = n+ε où n est un entier et ε un réel compris entre 0,25 et 0,75.

Dans la **figure 4C,** la dé-corrélation des séquences de bits est simplement obtenue par inversion des données transmises (430) entre canaux adjacents de telle façon que celles-ci prennent des valeurs opposées à la transmission mais qui seront rétablies à la réception.

## Revendications

1. Système de transmission par fibres optiques, notamment un commutateur optique, comprenant :
un premier dispositif pour régénérer une pluralité de signaux électriques ou optiques (211, 213, 215, 217) en un signal optique composite (235) incluant une pluralité de longueurs d'ondes,
un premier circuit d'horloge (220) fournissant un signal d'horloge commun pour régénérer ces signaux électriques ou optiques ;
un second dispositif pour régénérer ledit signal optique composite (235) en une pluralité de signaux électriques ou optiques (311, 313, 315, 317), ledit second dispositif comprenant un moyen pour dé-multiplexer (330) ladite pluralité de longueurs d'ondes et une pluralité de régénérateurs (310, 312, 314, 316) connectés respectivement à chacune des sorties dudit moyen pour dé-multiplexer, chacun des régénérateurs comprenant une entrée d'horloge (321) et une sortie de données (319) pour restituer un signal régénéré ;
**caractérisé en ce que** ledit second dispositif pour régénérer comprend un second circuit d'horloge commun (320) pour fournir un signal d'horloge à chacun desdits régénérateurs; et un moyen (305) d'acquisition de signal d'horloge, commun à tous les régénérateurs du second dispositif pour régénérer, ce moyen d'acquisition étant connecté à l'une des sorties dudit moyen pour démultiplexer (330) et à une entrée dudit second circuit d'horloge commun (320).

2. Système selon la revendication 1, **caractérisé en ce qu'**il comprend en outre des moyens pour une compensation chromatique de ladite pluralité de longueurs d'ondes

3. Système selon la revendication 1, **caractérisé en ce qu'**il comporte des moyens (410, 420) pour décorréler des séquences de données servant à moduler lesdites longueurs d'ondes, avant de les commuter.

4. Système selon la revendication 3, **caractérisé en ce que** les moyens pour décorréler comportent une fibre optique à dispersion chromatique non nulle (410) pour appliquer un délai temporel optique audit signal optique composite.

5. Système selon la revendication 3, **caractérisé en ce que** les moyens pour décorréler comportent des moyens électriques pour retarder (420) au moins une des séquences de bits servant à moduler lesdites longueurs d'ondes.

6. Système selon la revendication 3, caractérisé en ce les moyens pour décorréler comportent des moyens pour inverser la séquence de bits (430) servant à moduler lesdites longueurs d'ondes.

7. Système selon l'une quelconque des revendications 3 à 6, **caractérisé en ce que** ladite dé-corrélation est toujours synchrone à une horloge du premier dispositif pour régénérer.

8. Système selon l'une des revendications 4 à 6, **caractérisé en ce que** ledit décalage temporel, mesuré en périodes de bit, est supérieur à n+0,25 et inférieur à n+0,75, n étant un nombre entier.
